# EUROPEAN PATENT APPLICATION

(11) **EP 0 751 192 A1**
(43) Date of publication of application: **02.01.1997**
(21) Application number: 95912411.6
(22) Date of filing: 15.03.1995
(51) Int. Cl.: C09D 5/03, C09D 5/46, C09D 125/00, C09D 163/00, C09D 167/00, C09D 175/00, B05D 7/24

(54) **POWDER PAINT, METHOD OF MANUFACTURING THE SAME, AND METHOD OF PAINTING USING THE PAINT**

(30) Priority: 15.03.1994 JP 68969/94; 10.11.1994 JP 300117/94
(71) Applicant: NIPPON CARBIDE KOGYO KABUSHIKI KAISHA, Tokyo 100 (JP)
(72) Inventor: UEMAE, M.3-203,Nip.Car.Kogyo Kabush.Kaisha Shataku, Sano-shi, Tochigi 327 (JP); TONAMI, N., Park Hills(room no.5),40 Aza Sakanoue, Fukushima 962 (JP); MIYAZAKI, Hirobumi, SorcierK 203, Uozu-shi, Toyama 937 (JP); NAKAZATO, 3-204,Nip.Car.Kogyo Kabu.Kaisha Shataku, Sano-shi, Tochigi 327 (JP); SERIZAWA, Hiroshi, Saitama 347 (JP)
(74) Representative: Weisert, Annekäte, Dipl.-Ing. Dr.-Ing.
(86) International application number: JP9500426
(87) International publication number: WO9525145

(57) **Abstract**

The present invention provides a powder coating comprising associated particles having an average particle diameter of 3-70 µm, said associated particles containing fine polymer particles having an average particle diameter of 0.01-2 µm.

The powder coating of the present invention comprises powder coating particles which have a relatively narrow particle size distribution, which have a relatively small average particle diameter, and which are controlled in shape. Moreover, the powder coating can be produced at a high yield, is greatly superior in fluidity and electrifiability as compared with conventional powder coatings; gives a coating film having excellent luster and sufficient smoothness; and can be applied in a thin film.

## Description

### Technical Field

The present invention relates to a powder coating which is capable of forming a coating film superior in luster, reflecting property, weatherability and other film properties and which is useful as a coating for vehicles, ships, household electric/electronic appliances, coated steel plates, etc.; as well as to a process for production of the powder coating. More particularly, the present invention relates to a powder coating comprising associated particles containing fine polymer particles, preferably associated particles of secondary particles containing primary particles of fine polymer particles; a process for production of the powder coating; and a method for application of the powder coating.

### Background Art

Powder coatings of general and wide use have heretofore been produced by dry-blending a resin produced by one of various processes, with a curing agent, a fluidity-controlling agent, a coloring agent, an anti static agent optionally added, etc., melt-kneading the blend by the use of an extruder or the like, and subjecting the kneaded material to grinding and classification.

However, in conventional processes for production of powder coating, such as the above process comprising melt-kneading and grinding, there was a hurdle in controlling the particle diameters of powder coating and it was difficult to produce particles of intended diameters at a high yield, which increased the production cost of powder coating. This tendency was higher as the particle diameters of powder coating were smaller. Further, the powder coating produced had low fluidity and large particle diameters, which gave a coating film of insufficient luster and smoothness. Furthermore, application of the produced powder coating in a small thickness gave an insufficient film, which made thin-film formation difficult. Thus, the powder coating produced by any conventional process had various problems.

An object of the present invention is to substantially alleviate the above-mentioned problems possessed by the powder coatings heretofore used generally and widely and to produce, by employing a novel process, a powder coating at a higher yield at a lower cost than in conventional processes for production of powder coating.

Another object of the present invention is to produce a powder coating which has good fluidity and electrifiability and which gives a coating film of high luster and sufficient smoothness.

Other object of the present invention is to provide a powder coating which can give a thin film easily.

Still other object of the present invention is to provide a process for production of the above powder coating and a method for application of the powder coating.

### Disclosure of the Invention

The present invention provides a powder coating comprising associated particles having an average particle diameter of 3-70 µm, said associated particles containing fine polymer particles having an average particle diameter of 0.01-2 µm.

In the present invention, the fine polymer particles are preferably obtained from a polymer emulsion and contain a polar group(s), and the associated particles are preferably associated particles of secondary particles of the fine polymer particles.

The present invention further provides a process for producing a powder coating, which comprises agglomerating fine polymer particles having an average particle diameter of 0.01-2 µm, in an aqueous medium to form a dispersion of associated particles having an average particle diameter of 3-70 µm, drying said dispersion of associated particles to obtain associated particles, and making said associated particles into a powder coating.

Thus, according to the present invention, powder coating particles controlled in shape can be produced at a high yield at a low cost, without subjecting a bulk material obtained by melt-kneading, to grinding and classification. The produced powder coating has good fluidity and can give a coating film superior in uniformity, luster and smoothness. The powder coating of the present invention has such striking features.

Further, surprisingly in the powder coating of the present invention, when two or more kinds of powder coatings having different hues are blended uniformly and applied, the resulting coating film gives the same hue as obtained when two or more kinds of coloring agents having the same hues as the powder coatings are blended uniformly. In conventional powder coatings, when two or more kinds of powder coatings having different hues were blended and applied, there was always obtained a coating film in which the different hues appeared in respective dots. In contrast, in the present powder coating, by producing beforehand a plurality of powder coatings having different hues, blending them, at a coating site or the like, in a appropriate ratio so as to meet the intended hue of a coating film to be formed, and applying the blend, there can be obtained a coating film having an intended hue.

The powder coating of the present invention is hereinafter described in more detail.

The powder coating of the present invention comprises associated particles containing fine polymer particles. Preferably, the associated particles further contain a coloring agent, a curing agent, an anti static agent, etc. The associated particles preferably are associated particles of secondary particles of said fine polymer particles. The associated particles may contain fine particles of different polymers.

The polymer fine particles used in the present invention consist only of fine polymer particles having an average particle diameter of 0.01-2 µm, preferably 0.05-2 µm, and are the minimum resin units constituting the associated particles of the present invention.

The fine polymer particles may be produced by any process which can produce a thermoplastic polymer having the above-mentioned particle diameter, such as a process wherein a bulk polymer, a flaky polymer or the like is finely ground, a process wherein suspension polymerization is conducted to obtain particles, or a process wherein emulsion polymerization is conducted to obtain emulsion particles. However, the process wherein emulsion polymerization is conducted to obtain emulsion particles, is preferred because it can produce particles which have small diameters and which are relatively uniform. The resin constituting the fine polymer particles are hydrophobic and are substantially insoluble in an aqueous medium or do not swell in an aqueous medium by 20% or more, preferably 5% or more in terms of areal swelling.

The resin constituting the fine polymer particles is not particularly restricted and may be any resin as long as it is generally used as a binder resin in production of powder coating. There can be used, for example, thermoplastic resins such as polystyrene resin, poly(meth)acrylate resin, styrene/(meth)acrylate resin, olefinic resin, polyamide resin, polycarbonate resin, polyether resin, polysulfone resin, polyester resin, epoxy resin, polybutadiene resin and the like; thermosetting resins such as urea resin, urethane resin, urea resin, epoxy resin and the like; and blends of these resins. Of these resins, preferred are a polystyrene resin, a (meth)acrylate resin, a styrene/(meth)acrylate resin, an epoxy resin and a polyester resin; more preferred are a polystyrene resin, a poly(meth)acrylate resin and a styrene/(meth)acrylate resin because emulsion polymers thereof can be obtained easily; particularly preferred are a poly(meth)acrylate resin and a styrene/(meth)acrylate resin having a styrene content of 40% or less because they give a coating film superior in weatherability and durability.

The resin may be a complete polymer such as thermoplastic resin, or may be a polymer containing an oligomer, a prepolymer, etc. as seen in thermosetting resins. The resin includes a homopolymer, a copolymer, a block polymer, a graft copolymer, a polymer blend, etc.

The polystyrene resin is a (co)polymer composed mainly of a styrene type monomer. Examples of the styrene type monomer include styrene, o-methylstyrene, m-methylstyrene, p-methylstyrene, α-methylstyrene, p-ethylstyrene, 2,4-dimethylstyrene, p-n-butylstyrene, p-t-butylstyrene, p-n-hexylstyrene, p-n-octylstyrene, p-n-nonylstyrene, p-n-decylstyrene, p-n-dodecylstyrene, p-methoxystyrene, p-phenylstyrene, p-chlorostyrene, 3,4-dichlorostyrene and p-chloromethylstyrene. Styrene is particularly preferred.

The poly(meth)acrylate resin is a (co)polymer composed mainly of at least one (meth)acrylic monomer. Examples of the monomer(s) constituting the resin include methyl acrylate, ethyl acrylate, n-butyl acrylate, isobutyl acrylate, propyl acrylate, n-octyl acrylate, dodecyl acrylate, lauryl acrylate, 2-ethylhexyl acrylate, stearyl acrylate, 2-chloroethyl acrylate, methyl α-chloroacrylate, methyl methacrylate, ethyl methacrylate, propyl methacrylate, n-butyl methacrylate, isobutyl methacrylate, n-octyl methacrylate, dodecyl methacrylate, lauryl methacrylate, 2-ethylhexyl methacrylate and stearyl methacrylate. Of these monomers, preferred is a (meth)acrylic acid ester of an aliphatic alcohol having 1-12, preferably 3-8 carbon atoms, or a combination of two or more such esters.

The resin constituting the fine polymer particles, preferably contain a polar group(s).

The polar group(s) contained in the resin include, for example, acidic polar groups such as carboxyl group, sulfone group, phosphoric acid group, formyl group and the like; basic polar groups such as amino group and the like; and neutral polar groups such as amide group, hydroxyl group, cyano group, epoxy group and the like.

The polar group(s) can be introduced into the resin constituting the fine polymer particles, by a reaction such as copolymerization, condensation polymerization or addition polymerization of monomer having a polar group(s).

The monomer having a polar group(s) can be used in an amount of preferably 0.01-50% by weight, more preferably 0.1-30% by weight in the total monomers.

When the amount of the monomer having a polar group(s) exceeds the above upper limit, the associated particles obtained have reduced electrifiability under high humidity. When the amount is smaller than the above lower limit, it is generally difficult to obtain associated particles from fine resin particles.

Of the monomers having a polar group(s), the monomers having an acidic polar group(s) include, for example, an α,β-ethylenically unsaturated compound having a carboxyl group(s) and an α,β-ethylenically unsaturated compound having a sulfone group(s).

The α,β-ethylenically unsaturated compound having a carboxyl group(s) include, for example, acrylic acid, methacrylic acid, fumaric acid, maleic acid, itaconic acid, cinnamic acid, monomethyl maleate, monobutyl maleate and monooctyl maleate.

The α,β-ethylenically unsaturated compound having a sulfone group(s) include, for example, sulfonated ethylene, sodium salt thereof, allylsulfosuccinic acid, octyl allylsulfosuccinate.

Of the monomers having a polar group(s), the monomers having a basic polar group(s) include, for example, (meth)acrylic acid esters of aliphatic alcohols of 1-12, preferably 2-8, particularly preferably 2-4 carbon atoms, containing an amino group, a salt thereof or a quaternary ammonium group, having 1-12, preferably 2-8, particularly preferably 2-4 carbon atoms; vinyl compounds having, as substituents, heterocyclic groups containing N as a ring member(s); and N,N-diallylalkylamines or quaternary ammonium salts thereof. Of these monomers, (meth)acrylic acid esters of aliphatic alcohols containing an amino group, a salt thereof or a quaternary ammonium group, are preferred as a comonomer having basicity.

The (meth)acrylic acid esters of aliphatic alcohols containing an amino group, a salt thereof or a quaternary ammonium group, include, for example, dimethylaminoethyl acrylate, dimethylaminoethyl methacrylate, diethylaminoethyl acrylate, diethylaminoethyl methacrylate, quaternary salts thereof, 3-dimethylaminophenyl acrylate and 2-hydroxy-3-methacryloxypropyl trimethyl ammonium salt.

The vinyl compounds having, as a substituent(s), a heterocyclic group(s) containing N as a ring member(s) include, for example, vinylpyridine, vinylpyrrolidone, vinyl-N-methylpyridinium chloride and vinyl-N-ethylpyridinium chloride.

The quaternary ammonium salts of N-diallylalkylamine include, for example, N,N-diallyl methyl ammonium chloride and N,N-diallyl ethyl ammonium chloride.

Of the monomers having a polar group(s), the monomers having a neutral polar group(s) include (meth)acrylamide or a derivative thereof wherein the N atom of (meth)acrylamide is substituted with one or two alkyl groups having 1-18 carbon atoms; a (meth)acrylic acid ester having a hydroxyl group(s); a (meth)acrylonitrile having a cyano group(s); a (meth)acryloglycidyl having an epoxy group(s); an alkylglycidyl ether of (meth)allyl alcohol ; and so forth.

The (meth)acrylamide or a derivative thereof wherein the N atom of (meth)acrylamide is substituted with one or two alkyl groups having 1-18 carbon atoms, includes, for example, acrylamide, N-butylacrylamide, N,N-dibutylacrylamide, piperidylacrylamide, methacrylamide, N-butylmethacrylamide, N,N-dimethylacrylamide and N-octadecylacrylamide.

The (meth)acrylic acid ester having a hydroxyl group(s) includes, for example, 2-hydroxyethyl (meth)acrylate and 2-hydroxypropyl (meth)acrylate.

The (meth)acryloglycidyl having an epoxy group(s) includes, for example, glycidyl (meth)acrylate, β-methylglycidyl (meth)acrylate and (meth)acryl-N-glycidylamide.

The monomers having a carboxyl group(s) as a polar group(s), used in condensation polymerization or addition polymerization, include, for example, aromatic dicarboxylic acids such as terephthalic acid, isophthalic acid, phthalic acid, phthalic anhydride, benzene-1,2,4-tricarboxylic acid, benzene-1,2,5-tricarboxylic acid, naphthalene-2,5,7-tricarboxylic acid, naphthalene-1,2,4-tricarboxylic acid and the like; aliphatic carboxylic acids such as oxalic acid, malonic acid, succinic acid, glutaric acid, adipic acid, hexahydrophthalic anhydride, itaconic acid, maleic acid, fumaric acid, mesaconic acid, citraconic acid, 1,2,4-butanetricarboxylic acid, hexane-1,2,5-tricarboxylic acid, 1,3-dicarboxy-2-carboxymethylpropene, 1,3-dicarboxy-2-methyl-2-carboxymethylpropane, tetra(carboxymethyl)methane, octane-1,2,7,8-tetracarboxylic acid, maleic anhydride and the like; and alicyclic carboxylic acids such as tetrahydrophthalic acid, hexahydrophthalic acid, methyltetrahydrophthalic acid, methylhexahydrophthalic acid, methylhymic acid, trialkyltetrahydrophthalic acid, methylcyclohexenedicarboxylic acid and the like, and anhydrides thereof.

The monomers having an amino group(s) as a polar group(s), used in condensation polymerization or addition polymerization, include, for example, chain aliphatic amines such as ethylenediamine, diethylenetriamine, triethylenetetramine, tetraethylenepentamine, dipropylenediamine, diethylaminopropylamine, hexamethylenediamine and the like; cyclic amines such as menthenediamine, isophoronediamine, bis(4-amino-3-methyldicyclohexyl)methane, diaminodicyclohexylmethane, bis(aminomethyl)cyclohexane, N-aminoethylpiperazine and he like; and aromatic amines such as m-phenylenediamine, diaminodiphenylmethane, diaminodiphenylsulfone, diaminodiethyldiphenylmethane and the like.

The monomers having a hydroxyl group(s) as a polar group(s), used in condensation polymerization or addition polymerization, include, for example, water; aliphatic diols such as ethylene glycol, propylene glycol, hexylene glycol, glycerine, trimethylenepropane, hexanetriol, triethanolamine, diglycerine, pentaerythritol, methyl glycoside and the like; and hydroxyphenyl-substituted aliphatic compounds such as 1,1-bis(4-hydroxyphenyl)methane, 2,2-bis(4-hydroxyphenyl)propane and the like; and etherified bisphenol compounds such as polyoxyethylene (2,2)-2,2-bis(4-hydroxyphenyl)propane, polyoxyethylene (4,0)-2,2-bis(4-hydroxyphenyl)propane, polyoxypropylene (2,2)-2,2-bis(4-hydroxyphenyl)propane and the like.

As the monomers having a polar group(s), used in condensation polymerization or addition polymerization, there can also be used, for example, compounds wherein a sulfone group, a phosphoric acid group, a formyl group or the like is bonded to one of the above-mentioned compounds.

The fine polymer particles used in the present invention can be produced favorably by emulsion polymerization. The surfactant used in the emulsion polymerization may be any of a nonionic surfactant, an anionic surfactant, a cationic surfactant and an amphoteric surfactant.

The nonionic surfactant includes, for example, polyoxyalkylene alkyl ethers such as polyoxyethylene lauryl ether, polyoxyethylene stearyl ether and the like; plyoxyalkylene alkyl phenol ethers such as polyoxyethylene octyl phenol ether, polyoxyethylene nonyl phenol ether and the like; sorbitan-fatty acid esters such as sorbitan monolaurate, sorbitan monostearate, sorbitan trioleate and the like; polyoxyalkylene sorbitan-fatty acid esters such as polyoxyethylene sorbitan monolaurate and the like; polyoxyalkylene-fatty acid esters such as polyoxyalkylene monolaurate, polyoxyethylene monostearate and the like; glycerine-fatty acid esters such as monoglyceride of oleic acid, monoglyceride of stearic acid and the like; and polyoxyethylene-polypropylene block copolymers.

The anionic surfactant includes, for example, fatty acid salts such as sodium stearate, sodium oleate, sodium laurate and the like; alkylarylsulfonic acid salts such as sodium dodecylbenzenesulfonate and the like; alkyl sulfates such as sodium lauryl sulfate and the like; alkyl sulfosuccinate salts and derivatives thereof, such as sodium monooctyl sulfosuccinate, sodium dioctyl sulfosuccinate, sodium polyoxyethylene lauryl sulfosuccinate and the like; polyoxyalkylene alkyl ether sulfate salts such as sodium polyoxyethylene lauryl ether sulfate and the like; and polyoxyalkylene alkyl aryl ether sulfates such as sodium polyoxyethylene nonyl phenol ether sulfate and the like.

The cationic surf actant includes, for example, alkylamine salts such as laurylamine acetate and the like; quaternary ammonium salts such as lauryl trimethyl ammonium chloride, alkylbenzyl dimethyl ammonium chloride and the like; and polyoxyethylalkylamines. The amphoteric surfactant includes, for example, alkyl betaines such as lauryl betaine and the like.

There can also be used those surfactants obtained by replacing part of the hydrogen atoms of alkyl group of one of the above-mentioned surfactants, with a fluorine atom(s).

There can also be used so-called reactive surfactants which are the above-mentioned surfactants having, in the molecule, a radical-copolymerizable unsaturated bond(s). Such reactive surfactants include reactive surfactants of sulfosuccinic acid salt type, alkenylsuccinic acid salt type or the like.

Specific examples of the reactive surfactant of sulfosuccinic acid salt type include Latemul S-120, Latemul S-120A, Latemul S-180 and Latemul S-180A (trade names, products of Kao Corporation) and Eleminol JS-2 (trade name, product of Sanyo Chemical Industries, Ltd.). Specific examples of the reactive surfactant of alkenylsuccinic acid salt type include Latemul ASK (trade name, product of Kao Corporation).

Further, the reactive anionic surfactants usable suitably in the present invention include salts of sulfoalkyl (C₁₋₄) esters of aliphatic unsaturated carboxylic acids (C₃₋₅), for example, salts of sulfoalkyl (meth)acrylates such as sodium salt of 2-sulfoethyl (meth)acrylate, ammonium salt of 3-sulfopropyl (meth)acrylate and the like; and salts of alkylsulfoalkyl diesters of aliphatic unsaturated dicarboxylic acids, such as sodium salt of alkyl sulfopropylmaleate, ammonium salt of polyoxyethylene alkyl sulfopropylmaleate, ammonium salt of polyoxyethylene alkyl sulfoethylfumarate, salt of alkyl diester of sulfoethyl fumarate and the like.

As the reactive anionic surfactants, there can also be used, for example, a salt of sulfuric acid ester of alkyl phenol ether of dipolyethylene glycol maleate, a salt of sulfuric acid ester of dihydroxyethyl phthalate (meth)acrylate, a salt of sulfuric acid ester of 1-allyloxy-3-alkylphenoxy-2-polyoxyethylene glycerol ether [Adeka Soap SE-10N (trade name), product of Asahi Denka Kogyo K.K.], and a salt of sulfuric acid ester of polyoxyethylene alkyl alkenyl phenol [Aqualon (trade name), product of Daiichi Kogyo Seiyaku Co., Ltd.].

These surfactants can be used singly or in appropriate combination. The reactive anionic surfactant can be used in appropriate combination, when necessary, with one of the above-mentioned ordinary anionic surfactants (non-reactive) and/or nonionic surfactants.

Of these surfactants, there are preferred, from the standpoint of the small amount of agglomerate generated during emulsion polymerization, nonionic surfactants such as polyoxyalkylene alkyl ether and polyoxyalkylene alkyl phenol ether; and anionic surfactants such as salt of alkyl arylsulfonate, salt of alkyl sulfate, salt of alkyl sulfosuccinate and derivative thereof, salt of polyoxyalkylene alkyl ether sulfate and salt of polyoxyalkylene alkyl phenol ether sulfate. Use of reactive surfactant is also advisable in view of the excellency in properties such as adhesivity to substrate and water resistance.

These surfactants can be used in an amount of, for example, about 0.03-10% by weight, preferably about 0.05-7% by weight, particularly about 0.1-5% by weight based on the total amount of the monomers.

The protective colloid usable in emulsion polymerization for production of the polymer used in the present invention includes, for example, polyvinyl alcohols such as partially saponified polyvinyl alcohol completely saponified polyvinyl alcohol, modified polyvinyl alcohol and the like; cellulose derivatives such as hydroxyethyl cellulose, hydroxypropyl cellulose, carboxymethyl cellulose and the like; and natural polysaccharides such as guar gum and the like. These compounds can be used singly or in combination of two or more kinds. The amount of the protective colloid used can be determined suitably, but can be, for example, about 0-10% by weight, preferably about 0.05-5% by weight, particularly preferably about 0.05-2% by weight based on the total weight of the monomers used.

When the surfactant and the protective colloid are used in amounts more than appropriate, the coating film obtained tends to have inferior water resistance. When they are used in amounts less than appropriate, the resulting powder coating tends to have inferior sprayability.

The polymerization initiator usable in emulsion polymerization for production of the polymer used in the present invention can be exemplified by persulfuric acid salts such as sodium persulfate, potassium persulfate, ammonium persulfate and the like; organic peroxides such as t-butyl hydroperoxide, cumene hydroperoxide, p-menthane hydroperoxide and the like; and hydrogen peroxide. These compounds can be used singly or in combination of two or more kinds. The amount of the polymerization initiator used can be determined suitably, but is, for example, about 0.05-1% by weight, preferably about 0.1-0.7% by weight, particularly about 0.1-0.5% by weight based on the total weight of the monomers used.

In emulsion polymerization for production of the polymer, a reducing agent can be used as desired. The reducing agent can be exemplified by reducing organic compounds such as ascorbic acid, tartaric acid, citric acid, grape sugar and the like; and reducing inorganic compounds such as sodium thiosulfate, sodium sulfite, sodium bisulfite, sodium metabisulfite and the like. The amount of the reducing agent used can be determined suitably, but is, for example, about 0.05-1% by weight based on the total weight of the monomers used.

In carrying out the emulsion polymerization, the predetermined total amount of surfactant can be added beforehand to the reaction system. It is also possible to add part of the surfactant beforehand to the reaction system and initiate a reaction and, in the middle of the reaction, add the rest of the surfactant continuously or at intervals in divided portions, and this approach is preferable. The monomer(s) and other comonomer(s) used as desired for modification purpose can also be added in one lump, divided portions or continuously; however, continuous addition is preferable for reaction control.

During emulsion polymerization, besides the surfactant and the polymerization initiator, there can also be added, as necessary, a pH-controlling agent, a polymerization degree-controlling agent, a defoaming agent, etc.

The emulsion polymerization using the above-mentioned raw materials can be conducted by a per se known process, whereby fine polymer particles can be obtained.

The resin constituting the fine polymer particles used in the present invention can have a glass transition temperature (Tg) in the range of generally 0-10°C, preferably 10-80°C, most preferably 20-70°C. The desirable gellation degree thereof is in the range of generally 0-50% by weight, preferably 0-30% by weight in terms of insolubles when subjected to Soxhlet extraction under acetone refluxing.

In the present invention, the associated particles are agglomerated particles of fine polymer particles, preferably of fine polymer particles and a curing agent, more preferably of fine polymer particles, a curing agent and a coloring agent and/or an antistatic agent. The associated particles have an average particle diameter of 3-70 µm, preferably 5-30 µm, most preferably 5-15 µm.

The present associated particles may be formed directly from the fine polymer particles, or may be formed by association of the secondary particles of the fine polymer particles. When associated particles having controlled particle diameters are required, the present associated particles are preferably formed by association of the secondary particles of the fine polymer particles. Herein, the secondary particles refer to "intermediate agglomerate particles" when the fine polymer particles are agglomerated to form intermediate agglomerate particles and the intermediate agglomeration particles are further agglomerated to obtain associated particles. In any approach, associated particles having desired particle diameters are formed in an aqueous medium and the associated particles of aqueous dispersion state is dried to obtain associated particles of powdery state.

In forming the associated particles directly from the fine polymer particles, there can be used, for example, a spray drying method which comprises spraying a dispersion of the fine polymer particles and drying the resulting droplets at a high temperature to forcibly associate the fine polymer particles present in the droplets; and an in-aqueous-medium association method which comprises applying pH adjustment or adding a salt, a curing agent or the like to an aqueous dispersion of the fine polymer particles, for example, a polymer emulsion produced as mentioned above, to reduce the stability of the dispersion and forcibly associate the particles in an aqueous medium. The in-aqueous-medium association method, which comprises associating the particles in an aqueous medium to obtain associated particles, is preferred because the method can provide strong particles resistant to disintegration.

The secondary particles are each a particle wherein a large number of the fine polymer particles are agglomerated, preferably together with a coloring agent, by a bond such as ionic bond, hydrogen bond, metal coordination bond, weak acid-weak base bond, van der Waals force or the like, and can have an average particle diameter of generally 0.05-5 µm, preferably 0.1-5 µm. The secondary particles can be obtained by agglomerating the fine polymer particles, for example, by a method of applying a treatment (e.g. heating, pH adjustment, salt addition or curing agent addition) to a stable dispersion (e.g. emulsion) of the fine polymer particles to reduce the stability of the dispersion and forcibly bond the particles and, during the agglomeration, controlling the conditions of the above treatment to allow the resulting agglomerate to have the particle diameter range mentioned above with respect to the secondary particles.

By, for example, applying to the secondary particles, the same treatment as used for obtaining the secondary particles from the fine polymer particles and, during the treatment, controlling the treatment conditions and time to agglomerate the secondary particles, there can be obtained associated particles having desired particle diameters.

In the associated particles of the present invention, it is preferable that at least part of the contact area between the fine polymer particles and/or between the secondary particles constituting the associated particles is melt-bonded in a filmy state, and it is more preferable that the most part of the contact area between the fine polymer particles or between the secondary particles is melt-bonded in a filmy state and that the contacted particles form substantially one piece.

The associated particles obtained by direct agglomeration of fine polymer particles or agglomeration of secondary articles, in an aqueous medium have random and irregular shapes of very rough surfaces. When the aqueous dispersion of the associated particles is continuously stirred at a temperature in the range of Tg (of the polymer constituting the particles) to (Tg + 85)°C, the contact area between the fine polymer particles and/or between the secondary particles is melt-bonded in a filmy state and individual particles are melted into larger particles; simultaneously therewith, the random and irregular shapes of rough surfaces, of the associated particles change gradually into smooth surfaces and nearly spherical shapes. This melt-bonding and film-forming treatment can be conducted for about 1-6 hours, preferably about 2-4 hours.

The associated particles after melt-bonding and film-forming treatment are melt-bonded in a filmy state between the secondary particles and consequently cause substantially no disintegration during storage, transportation and application (coating). Therefore, the associated particles after the treatment is particularly suitable as a powder coating for use in electrostatic coating.

The associated particles constituting the powder coating of the present invention can contain a coloring agent in an amount of preferably 0-300 parts by weight, more preferably 0-200 parts by weight, most preferably 0-100 parts by weight per 100 parts by weight of the polymer.

The coloring agent usable in the present invention can be exemplified by pigments such as inorganic pigment, organic pigment and the like; and dyes such as organic dye and the like. These pigments and dyes can be used in combination of two or more kinds, as necessary.

Suitable as the inorganic pigment are metal powder type pigments such as zinc powder, iron powder, copper powder and the like; metal oxide type pigments such as magnetite, ferrite, red iron oxide, titanium oxide, zinc oxide, silica, chromium oxide, ultramarine, cobalt blue, cerulean blue, mineral violet, trilead tetroxide and the like; carbon type pigments such as carbon black, thermatomic carbon, lamp black, furnace black and the like; sulfide type pigments such as zinc sulfide, cadmium red, selenium red, mercury sulfide, cadmium yellow and the like; chromate type pigments such as molybdenum red, barium yellow, strontium yellow, chromium yellow and the like; ferrocyanide compound type pigments such as Milori blue and the like; and so forth.

The organic pigment includes azo type pigments such as Hansa Yellow G, Benzidine Yellow, Benzidine Orange, Permanent Red 4R, Pyrazolone Red, Lithol Red, Brilliant Scarlet G, BON Maroon Light and the like; acid dye type pigments and basic dye type pigments obtained by precipitating, with a precipitating agent, dyes such as Orange II, Acid Orange R, Eosine, Quinoline Yellow, Tartrazine Yellow, Acid Green, Peacock Blue, Alkali Blue and the like, or by precipitating, with tannic acid, PTA, PMA, PTMA or the like, dyes such as Rhodamine, Magenta, Malachite Green, Methyl Violet, Victoria Blue and the like; mordant type pigments such as metal salt of hydroxyantraquinone, Alizarine Madder Lake and the like; phthalocyanine type pigments such as Phthalocyanine Blue, copper phthalocyanine sulfonate and the like; quinacridone type pigments and dioxane type pigments such as Quinacridone Red, Quinacridone Violet, Carbazole Dioxazine Violet and the like; other organic pigments such as organic fluorescent pigment, Aniline Black and the like; and so forth.

As the organic dye, there can be used a Nigrosine dye and an aniline dye.

The associated particles constituting the powder coating of the present invention can also contain a curing agent in an amount of preferably 0-300 parts by weight, more preferably 1-200 parts by weight, most preferably 3-100 parts by weight per 100 parts by weight of the polymer. The curing agent can be allowed to be present in the powder coating by mixing an aqueous dispersion of a curing agent of solid state or hydrophobic liquid state with an aqueous dispersion of the fine polymer particles to give rise to agglomeration. The curing agent can be used in one kind or in combination of two or more kinds, depending upon the necessity.

The curing agent can be any curing agent having a reactive group(s) reactive with the polar group(s) which may be possessed by the fine polymer particles, such as water-dispersible blocked isocyanate, water-dispersible epoxy resin, water-dispersible amino resin, water-dispersible aziridine compound, polycarboxylic acid compound or the like. The curing agent is preferably a low-molecular weight curing agent because it can uniformly diffuse into a coating film during film formation and improve the properties of the film in impact resistance, solvent resistance, etc. Particularly preferable as the curing agent are low-molecular weight polyepoxy compounds such as bisphenol A-epichlorohydrin condensate, diepoxy compound having a polyether chain as the skeleton, alicyclic epoxy compound and the like; low-molecular weight polyisocyanate compounds such as blocked aliphatic polyisocyanate, blocked aromatic polyisocyanate, blocked alicyclic polyisocyanate and the like; and low-molecular polybasic acids such as aliphatic polycarboxylic acid (e.g. succinic acid or adipic acid), aromatic polycarboxylic acid (e.g. phthalic acid or isophthalic acid) and the like. The low-molecular weight curing agent has a molecular weight of generally 10,000 or less, preferably 3,000 or less, more preferably 1,000 or less.

The powder coating of the present invention can further comprise, as necessary, an antistatic agent, etc. The antistatic agent can be exemplified by, for positive charging, electron-donating dye of nigrosine type, metal salt of naphthenic acid or higher fatty acid, alkoxylated amine, quaternary ammonium salt, alkylamide, chelate, pigment, fluorine-treated activating agent and the like; and, for negative charging, electron-accepting organic complex, chlorinated paraffin, chlorinated polyester, acid group-excessive polyester, sulfonylamine of copper phthalocyanine and the like.

By using such an antistatic agent, it is possible to use, in electrostatic coating, a spray gun of friction-electrifying type, corona-electrifying type or the like.

The powder coating of the present invention may further contain a film smoothness improver. The film smoothness improver includes, for example, olefin-based resins (e.g. low-molecular weight polyethylene, low-molecular weight polypropylene, oxidized polyethylene and polyethylene tetrafluoride), an epoxy resin, a polyester resin, a styrene-butadiene copolymer (monomer ratio = 5/95 to 30/70), olefin copolymers (e.g. ethylene-acrylic acid copolymer, ethylene-acrylic acid ester copolymer, ethylene-methacrylic acid copolymer, ethylene-methacrylic acid ester copolymer, ethylene-vinyl chloride copolymer, ethylene-vinyl acetate copolymer and ionomer resin), a polyvinylpyrrolidone, a methyl vinyl ether-maleic anhydride copolymer, a maleic acid-phenol resin and a phenol-modified terpene resin, with olefin-based resins being preferred. These resins are used preferably in the form of an aqueous emulsion.

The powder coating of the present invention can further contain a fluidizing agent as necessary. The fluidizing agent can be exemplified by fine powders of hydrophobic silica, titanium oxide, aluminum oxide, etc. They are used in an amount of about 0.01-5 parts by weight, preferably about 0.1-1 part by weight per 100 parts by weight of the powder coating.

The powder coating of the present invention may be subjected to a surface treatment with a silane coupling agent or a titanium coupling agent for improvement of the moisture resistance. The coupling agent may be used in one kind or in combination of two or more kinds, as necessary.

An example of the preferable process for production of the present powder coating is shown below.

To an emulsion of a polar group-containing polymer, obtained by emulsion polymerization are added, as necessary, necessary amounts of a coloring agent powder, a curing agent and/or an antistatic agent; they are mixed into a uniform dispersion; the dispersion is stirred for generally 0.5-4 hours, preferably 1-3 hours; thereby, the primary particles of the polar group-containing polymer and the particles of the coloring agent are gradually agglomerated to form secondary particles having an average particle diameter of 0.05-5 µm. This dispersion is further stirred for generally 0.5-3 hours, preferably 1-2 hours, whereby the secondary particles are further agglomerated to grow into associated particles having an average particle diameter of 3-70 µm.

The thus obtained dispersion is further stirred at a temperature of Tg (of the polymer) to (Tg + 85)°C for 1-6 hours, preferably 2-4 hours, whereby are formed associated particles in which the contact areas between the secondary particles are melt-bonded in a filmy state.

### EXAMPLES

The present invention is hereinafter described more specifically by way of Examples. Incidentally, the test metods and evaluation methods employed in the Examples were as follows.

### (1) Preparation of test pieces

### (1-1) Test pieces each coated with a powder coating containing no coloring agent

A cationic electrocoating (U-600, product of Nippon Paint Co., Ltd.) was applied on a steel plate for automobile, specified by JIS G 3141 to obtain an electrocoated steel plate (hereinafter referred to "ED plate" in some cases) of 0.8 mm (thickness) × 100 mm × 200 mm. On the plate was sprayed the following intermediate coating by air spraying so as to give a film thickness (as dried) of 50 µm, followed by baking at 160°C for 20 minutes. The resulting plate had a 60° luster of 92.

### Compounding of intermediate coating

| | |
|---|---|
| Acrylic resin (solid content:50% by weight) | 100 parts by weight |
| Resin composition: | n-butyl methacrylate/styrene/2-hydroxyethyl methacrylate/maleic acid = 68/20/10/2 |
| Methyl isobutyl ketone solution | |
| Mn = 8,000, Mw/Mn = 5.6 | |
| Melamine resin Cymel 303 (product of American Cyanamid Co.) | 20 parts by weight |
| Titanium oxide CR-90 (product of Ishihara Sangyo Kaisha, Ltd.) | 30 parts by weight |

The above coating compound was fed into a glass bottle together with glass beads, and the glass bottle was subjected to stirring for 2 hours by the use of a paint shaker to prepare an intermediate coating.

To the above-obtained ED plate coated with an intermediate coating was applied, by electrocoating, a powder coating by the use of a commercial corona-electrifying type spray gun so as to give a film thickness of 30 µm. The applied voltage was 60 KV and the particles of the powder coating were charged negatively. Then, baking was conducted at 180°C for 30 minutes to prepare various test pieces.

### (1-2) Test pieces each coated with a powder coating containing a coloring agent

A powder coating was applied in the same manner as in (1-1) except that an EP plate not coated with any intermediate coating was used, whereby various test pieces were prepared.

### (2) Luster

Each of the test pieces obtained in (1) was measured for 60⁰ mirror-surface luster by the use of a color analyzer (TOPSCAN MODEL TC-1800 MKII, product of Tokyo Denshoku K.K.).

### (3) Adhesivity

To each of the test pieces obtained in (1) was applied a cross cut tester (product of Suga Shikenki K.K.), whereby cut lines having a depth reaching the steel surface of the test piece were made on the powder coating side of the test piece at intervals of 1 mm in both of the longitudinal and transverse directions of the test piece to form 100 squares per cm². To the thus-formed squares was attached a cellophane adhesive tape of 24 mm in width (product of Nichiban Co., Ltd.); the attached tape was subjected to quick 180⁰ peeling by hand; the number of the squares in which the coating film remained, was counted and expressed as said number/100.

### (4) Acid resistance

Each of the test pieces obtained in (1) was immersed in 5 wt. % hydrohloric acid of 20°C for 48 hours and taken out. The resulting test piece was evaluated for appearance (luster, blister, etc.) and softening, of coating film. The yardstick for the evaluation was as follows.
- ⓞ :: No change in coating film
- ○ :: Slight softening and delustering (however, these states returned to original states after standing at room temperature).
- △ :: Severe softening and delustering
- X :: Coating film showed dissolution and peeling.

### (5) Stain resistance

On each of the test pieces obtained in (1) was drawn a line by the use of an oily felt pen . Then, the line was wiped off by the use of a gauze impregnated with ethyl acetate. The condition of the coating film after wiping-off was evaluated according to the following yardstick.
- ⓞ :: No change in coating film
- ○ :: Coating film showed slight softening but restored.
- △ :: Coating film showed swelling.
- X :: Coating film showed dissolution.

### (6) Impact resistance

Each of the test pieces obtained in (1) was subjected to a DuPont type impact test according to JIS K 5400. That is, a shock mold of 6.35± 0.03 mm in radius and a receiving stand were fitted to a tester; a test piece was superimposed between the shock mold and the receiving stand, with the coating film side of the test piece directed upward; a weight of 500± 1 g was dropped on the shock mold from various heights not exceeding 50 cm. The impact resistance of the coating film of the test piece was evaluated by the maximum height at which the coating film received no damage in peeling, cracking, etc.

### (7) Weatherability

Each of the test pieces obtained in (1) was placed in a sunshine weatherometer (product of Suga Shikenki K.K.) for 400 hours, then taken out, and observed for the appearance of the coating film of the test piece.

### (8) Measurement of average particle diameter

In the present invention, average particle diameter refers to weight-average particle diameter.

The particle diameters of the fine polymer particles were measured by DLS method; the particle diameters of the secondary particles were measured by the use of a microscope or by DLS method; and the particle diameters of the associated particles were measured by the use of a Coulter counter.

In measurement by DLS method, first a sample was diluted with distilled water 50,000- to 150,000-fold, followed by sufficient stirring and mixing; about 10 ml of the mixture was transferred into a 21 mm⌀ glass cell by the use of a Pastuer pipette; the glass cell was set at a predetermined position of a dynamic light-scattering photometer (DLS-700, product of Ohtsuka Denki K.K.); and measurement was conducted under the follwing conditions.

### Measurement conditions

- Measurement temperature:: 25± 1°C
- Clock rate:: 10 µsec
- Correlation channel:: 512
- Accumulated times of measurement:: 200
- Light-scattering angle:: 90°

The results of measurement were computer-processed to determine an average particle diameter.

In measurement by the use of a Coulter counter, a Coulter multisizer (product of Nikkaki K.K.) was used; a 100 µ orifice was set; and measurement was conducted.

### Example 1

Into a reactor equipped with a stirrer, a refluxing condenser and a thermometer were fed 100 parts by weight of water, 1 part by weight of a nonionic surfactant [Emulgen 950 (trade name), product of Kao Corporation], 1.5 parts by weight of an anionic surfactant [Neogen R (trade name), product of Kao Corporation] and 0.5 part by weight of a polymerization initiator (pottasium persulfate, KPS). The contents in the reactor was heated to 70°C with blowing nitrogen thereinto. While the reactor inside was kept at the same temperature, there was continuously fed thereinto a monomers mixture consisting of 60 parts by weight of 2-ethylhexyl methacrylate (EHMA), 14 parts by weight of butyl acrylate (BA), 18.5 parts by weight of styrene (St) and 7.5 parts by weight of acrylic acid, to give rise to polymerization for 8 hours to obtain an emulsion of an acidic polar group-containing polymer, having a solid content of about 50% by weight.

Then, a mixture of 200 parts by weight of the acidic polar group-containing polymer emulsion obtained above, 2 parts by weight of a cationic surfactant [Sanisol B-50 (trade name), product of Kao Corporation] and 380 parts by weight of water was kept at about 30°C for 2 hours with the mixture being dispersed and stirred with a slusher. Part of the resulting mixture was taken out and observed by the use of a microscope, which confirmed agglomeration of fine polymer particles and formation of secondary particles. The mixture was then kept at 70°C for 3 hours with stirring. During the period, observation by a microscope confirmed association of the secondary particles and their growth into associated particles of about 10 µm. The resulting material was cooled and the aqueous slurry obtained was subjected to Buchner funnel filtration, water washing and vacuum drying at 50°C for 10 hours to prepare a powder coating.

To 100 parts by weight of the powder coating was added 0.5 part by weight of a silica [Aerosil R-972, proudct of NIPPON AEROSIL CO., LTD.] as a fluidizing agent to prepare a powder coating for testing. The powder coating had a softening point of 100°C and an average particle diameter of 10.5 µm. Using this powder coating, a coated test piece was prepared in accordance with the above-mentioned (1-1). The test piece had a coating film of high smoothness which kept the luster of the substrate. The test results on the properties of the coating film are shown in Table 2.

### Example 2

An emulsion of a basic polar group-containing polymer, having a solid content of about 50% by weight was obtained in the same manner as in Example 1 except that the monomers mixture consisting of 60 parts by weight of EHMA, 14 parts by weight of BA, 18.5 parts by weight of St and 7.5 parts by weight of AA, used in Example 1 was replaced by a monomers mixture consisting of 73.5 parts by weight of EHMA, 24.5 parts by weight of St and 2 parts by weight of dimethylaminoethyl acrylate (DMAA). The subsequent operation was the same as in Example 1 to prepare a powder coating. Thereto was added a fluidizing agent in the same manner as in Example 1 to prepare a powder coating for testing. Using this powder coating, a coated test piece was pepared in accordance with (1-1). The composition of the polymer used in the powder coating, the composition of the powder coating and the properties of the polymer and the powder coating are shown in Table 1; and the test results on the properties of the resulting coating film are shown in Table 2.

### Example 3

To 200 parts by weight of an emulsion of an acid polar group-containing polymer, prepared in the same manner as in Example 1 were added 30 parts by weight of titanium oxide (TiO₂) (CR-80, product of Ishihara Sangyo Kaisha, Ltd.) and 380 parts by weight of water. The resulting mixture was treated in the same manner as in Example 1 to prepare a powder coating.

To the powder coating was added a fluidizing agent in the same manner as in Example 1 to prepare a powder coating for testing. Using this powder coating, a coated test piece was pepared in accordance with (1-2). The composition of the polymer used in the powder coating, the composition of the powder coating and the properties of the polymer and the powder coating are shown in Table 1; and the test results on the properties of the resulting coating film are shown in Table 2.

### Example 4

To 200 parts by weight of an emulsion of an acid polar group-containing polymer, prepared in the same manner as in Example 1 were added 2 parts by weight of a catinic surfactant (Sanisol B-50), 10 parts by weight of a blocked isocyanate (BICY) (Elastron BN-11, aqueous dispersion having a solid content of about 35% by weight, product of DaiichiKogyo Seiyaku Co., Ltd.) (28.6 parts by weight as aqueous dispersion) and 430 parts by weight of water. The resulting mixture was treated in the same manner as in Example 1 to prepare a powder coating.

To the powder coating was added a fluidizing agent in the same manner as in Example 1 to prepare a powder coating for testing. Using this powder coating, a coated test piece was pepared in accordance with (1-1). The composition of the polymer used in the powder coating, the composition of the powder coating and the properties of the polymer and the powder coating are shown in Table 1; and the test results on the properties of the resulting coating film are shown in Table 2.

### Example 5

An emulsion of an acidic polar group-contain-ing polymer, having a solid content of about 50% by weight was obtained in the same manner as in Example 1 except that the monomers mixture consisting of 60 parts by weight of EHMA, 14 parts by weight of BA, 18.5 parts by weight of St and 7.5 parts by weight of AA, used in Example 1 was replaced by a monomers mixture consisting of 46 parts by weight of EHMA, 18.5 parts by weight of BA, 18.5 parts by weight of St, 7.5 parts by weight of AA and 9.5 parts by weight of 2-hydroxyethyl methacrylate (HEMA). The emulsion was subjected to the same tratment as in Example 4 to prepare a powder coating. To the powder coating was added a fluidizing agent in the same manner as in Example 4 to prepare a powder coating for testing. Using this powder coating, a coated test piece was pepared in accordance with (1-1). The composition of the polymer used in the powder coating, the composition of the powder coating and the properties of the polymer and the powder coating are shown in Table 1; and the test results on the properties of the resulting coating film are shown in Table 2.

### Examples 6-7

Two powder coatings were prepared in the same manner as in Example 1 except that the 10 parts by weight of BICY used in Example 4 was replaced by 10 parts by weight of a melamine resin (MR) (Nikalac MX-40, aqueous dispersion having a solid con tent of about 50% by weight, product of Sanwa Chemical Co., Ltd.) (20 parts by weight as aqueous dispersion) or by 10 parts by weight (25 parts by weight as aqueous dispersion) of a benzoguanamine resin (BGR) (RIOMIN BG-720, aqueous dispersion having a solid content of about 40% by weight, product of TOYO INK MFG. CO., LTD.).

To each of the powder coatings was added a fluidizing agent in the same manner as in Example 1 to prepare two powder coatings for testing. Using each powder coating, two coated test pieces were pepared in accordance with (1-1). The composition of the polymer used in each powder coating, the composition of each powder coating and the properties of each polymer and each powder coating are shown in Table 1; and the test results on the properties of each resulting coating film are shown in Table 2.

### Example 8

To 200 parts by weight of an acid polar group-containing polymer emulsion prepared in the same manner as in Example 1 were added 10 parts by weight of the BICY used in Example 4, 30 parts by weight of the TiO₂ used in Example 3 and 430 parts by weight of water. The resulting mixture was treated in the same manner as in Example 1 to prepare a powder coating.

To the powder coating was added a fluidizing agent in the same manner as in Example 1 to prepare a powder coating for testing. Using this powder coating, a coated test piece was prepared in accordance with (1-2). The composition of the polymer used in the powder coating, the composition of the powder coating and the properties of the polymer and the powder coating are shown in Table 1; and the test results on the properties of the resulting coating film are shown in Table 2.

### Example 9

A powder coating was prepared in the same manner as in Example 7 except that the mixture consisting of an acidic polar group-containing polymer emulsion, BICY, TiO₂ and water, used in Example 8 was kept at about 30°C for 2 hours with dispersing and stirring with a slusher and then was kept at 60°C for 2 hours in place of being kept at 70°C for 3 hurs with stirring. In the powder coating, formation of associated particles was insufficient and the yield of the particles having an average particle diameter of 5 µm, obtained by classificiation was 60% by weight.

To the powder coating was added a fluidizing agent in the same manner as in Example 1 to prepare a powder coating for testing. Using this powder coating, a coated test piece was prepared in accordance with (1-2). The composition of the polymer used in the powder coating, the composition of the powder coating and the properties of the polymer and the powder coating are shown in Table 1; and the test results on the properties of the resulting coating film are shown in Table 2.

### Example 10

A powder coating was prepared in the same manner as in Example 8 except that the 200 parts by weight of an acidic polar group-containing polymer emulsion prepared in the same manner as in Example 1, used in Example 8 were replaced by 200 parts by weight of an acidic polar group-containing polymer emulsion prepared in the same manner as in Example 5.

To the powder coating was added a fluidizing agent in the same manner as in Example 1 to prepare a powder coating for testing. Using this powder coating, a coated test piece was prepared in accordance with (1-2). The composition of the polymer used in the powder coating, the composition of the powder coating and the properties of the polymer and the powder coating are shown in Table 1; and the test results on the properties of the resulting coating film are shown in Table 2.

### Example 11

An emulsion of a polar group-non-containing polymer, having a solid content of about 49% by weight was obtained in the same manner asin Example 1 except that 7.5 parts by weight of AA was not used. To 204 parts by weight of the polymer emulsion were added 10 parts by weight of a blocked isocyanate (BICY) (Elastron BN-11, aqueous dispersion having a solid content of about 35% by weight, product of Daiichi Kogyo Seiyaku Co., Ltd.) and 430 parts by weight of water. The mixture was made uniform. Thereto was added nitric acid for pH adjustment to 2.0, followed by stirring, to obtain associated particles having an average particle diameter of 15.5 µm. The treatment of the aqueous slurry and the subsequent operation were conducted in the same manner as in Example 1 to prepare a powder coating.

### Example 12

An emulsion of a neutral polar group-containing polymer, having a solid content of about 50% by weight was obtained in the same manner as in Example 1 except that the monomers mixture consisting of 60 parts by weight of EHMA, 14 parts by weight of BA, 18.5 parts by weight of St and 7.5 parts by weight of AA, used in Example 1 was replaced by a monomers mixture consisting of 50.5 parts by weight of EHMA, 10.0 parts by weight of BA, 24.5 parts by weight of St and 15.0 parts by weight of glycidyl methacrylate (GMA).

To 200 parts by weight of the polymer emulsion were added 12 parts by weight of dodecanedioic acid (DDA) and 380 parts by weight of water, followed by mixing to form a uniform mixture. The operation of adding nitric acid to form associated particles and the subsequent operation were conducted in the same manner as in Example 11 to prepare a powder coating. To the powder coating was added a fluidizing agent in the same manner as in Example 1 to prepare a powder coating for testing. Using this powder coating, a coated test piece was prepared in accordance with (1-1). The composition of the polymer used in the powder coating, the composition of the powder coating and the properties of the polymer and the powder coating are shown in Table 1; and the test results on the properties of the resulting coating film are shown in Table 2.

### Example 13

A powder coating having a blue hue was obtained in the same manner as in Example 3 except that the 30 parts by weight of titanium oxide used in Example 3 was replaced by 5 parts of Phthalocyanine Blue. The powder coating had an average particle diameter of 8.3 µ.

Next, a powder coating having a yellow hue was obtained in the same manner as in Example 3 except that the 30 parts by weight of titanium oxide used in Example 3 was replaced by 5 parts by weight of Bismuth Yellow. The powder coating had an average particle diameter of 8.5 µ.

50 parts by weight of the powder coating of blue hue and 50 parts by weight of the powder coating of yellow hue were mixed uniformly to obtain a powder coating for testing. Using the powder coating, a coated test piece was prepared in accordacne with (1-1). A uniform coating film having a green hue was obtained.

### Example 14

70 parts by weight of the powder coating having a white hue, obtained in Example 3 and 30 parts by weight of the powder coating having a blue hue, obtained in Example 13 were mixed uniformly to obtain a powder coating for testing. Using the powder coating, a coated test piece was prepared in accordacne with (1-1). A uniform coating film having a sky blue hue was obtained.

### Comparative Example 1

The same polymer emulsion as prepared in Example 1 was dried by the use of a spray dryer [Mobile Minor, product of Ashizawa Nitroatomizer K.K.] under the operating conditions of inlet temperature = 120°C, outlet temperature = 90°C, polymer emulsion feed rate = 1,500 ml/min, atomizer = 3 × 10⁴ rpm, to obtain a powder polymer. 100 parts by weight of the polymer, 30 parts by weight of titanium oxide "CR-80" and 10 parts by weight (as solid content) of the blocked isocyanate (Elastron BN-11) dried in the same manner as in the polymer emulsion were subjected to melt-kneading, grinding and classification to obtain a powder coating having an average particle diameter of 28 µm at a yield of 35% by weight.

To 100 parts by weight of the powder coating was added 0.5 part by weight of a silica (Aerosil R-972) as a fludizing agent, followed by mixing to obtain a powder coating for testing. The powder coating was very inferior in fluidity. Using the coating, electrostatic coating was conducted in the same manner as in Example 7; however, a coating film of very low luster was obtaiend. The composition of the polymer used in the powder coating, the composition of the power coating and the properties of the polymer and the powder coating are shown in Table 1, and the results of measurement of the resulting coating film are shown in Table 2.

In the powder coating of the present invention, the coating particles consist of fine particles, have a relatively narrow particle size distribution and a relatively small average particle diameter, and are control led in shape. Therefore, in production of the present powder coating, neither grinding nor classification of melt-kneaded bulk material is necessary and the yield of desired coating particles is high, and a powder coating can be produced at a high yield at a low cost. Further, in application of the present powder coating, the fluidity and electrifiability of the powder coating are greatly improved over those of conventional products; therefore, the resulting coating film has high luster and sufficient smoothness and can be made in a thin film.

Moreover, in the present powder coating, when two or more kinds of powder coatings having dfferent hues are blended uniformly and applied, the resulting coating film gives the same hue as obtained when two or more kinds of paints having the same hues as the powder coatings are blended uniformly. Therefore, by producing beforehand a plurality of powder coatings having different hues, blending them, at a coating site or the like, in an appropriate ratio so as to meet the intended hue of a coating film to be formed, and applying the blend, there can be obtained a coating film having an intended hue.

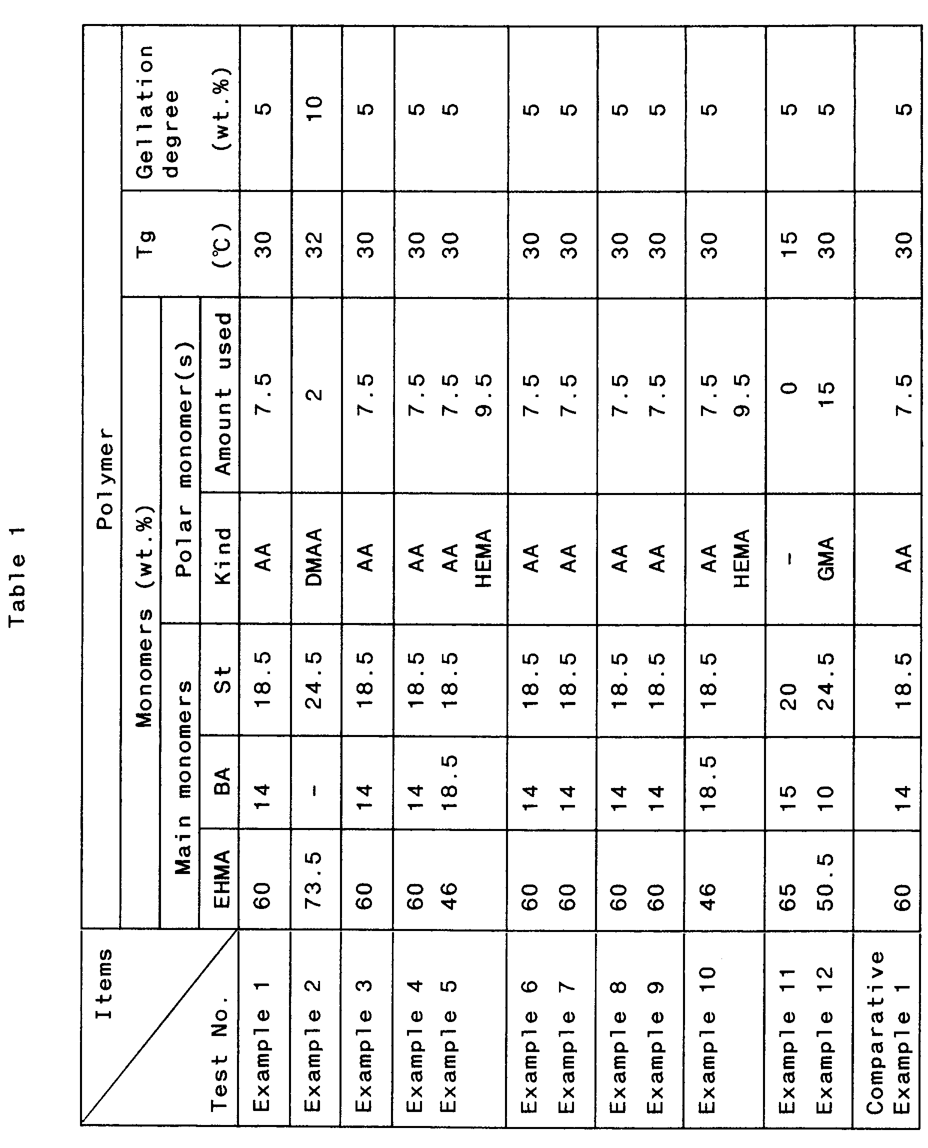

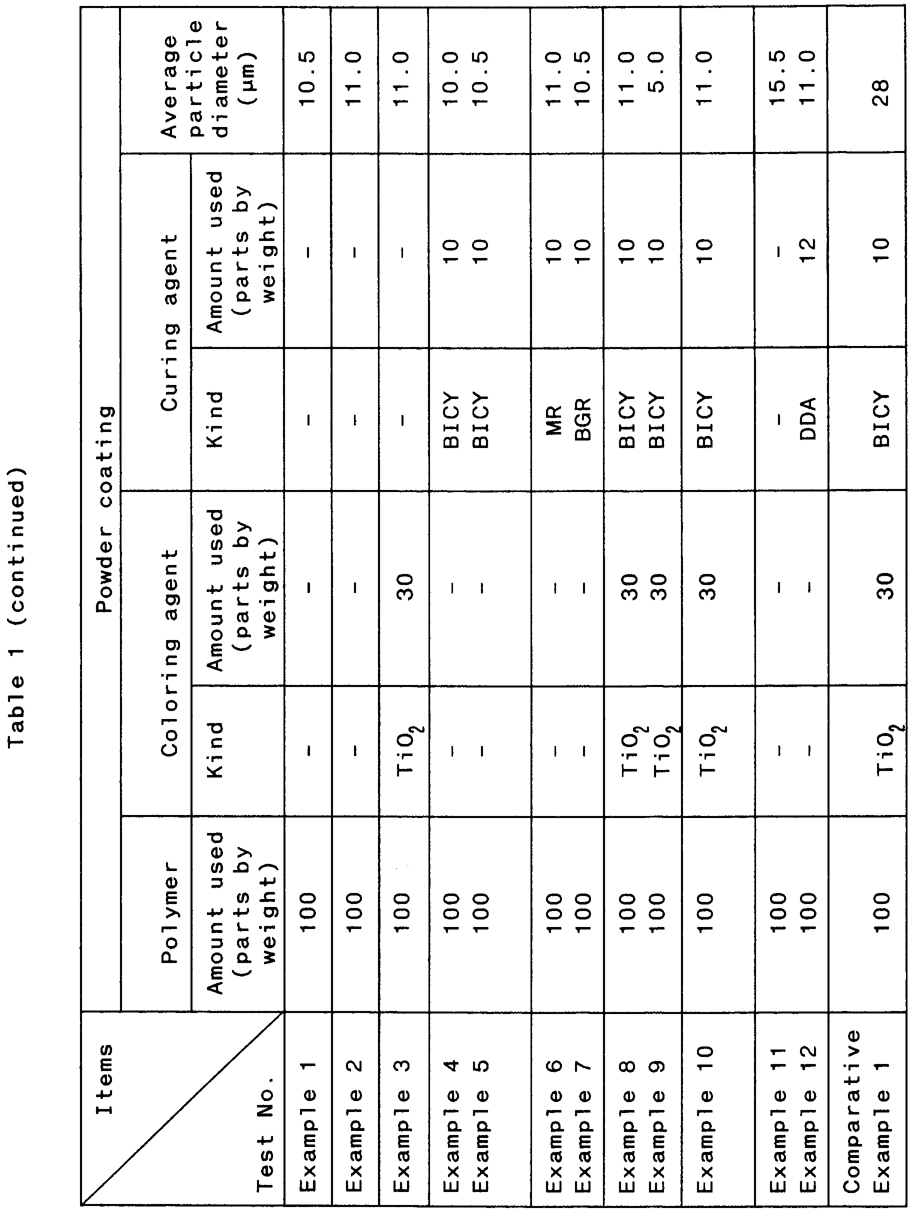

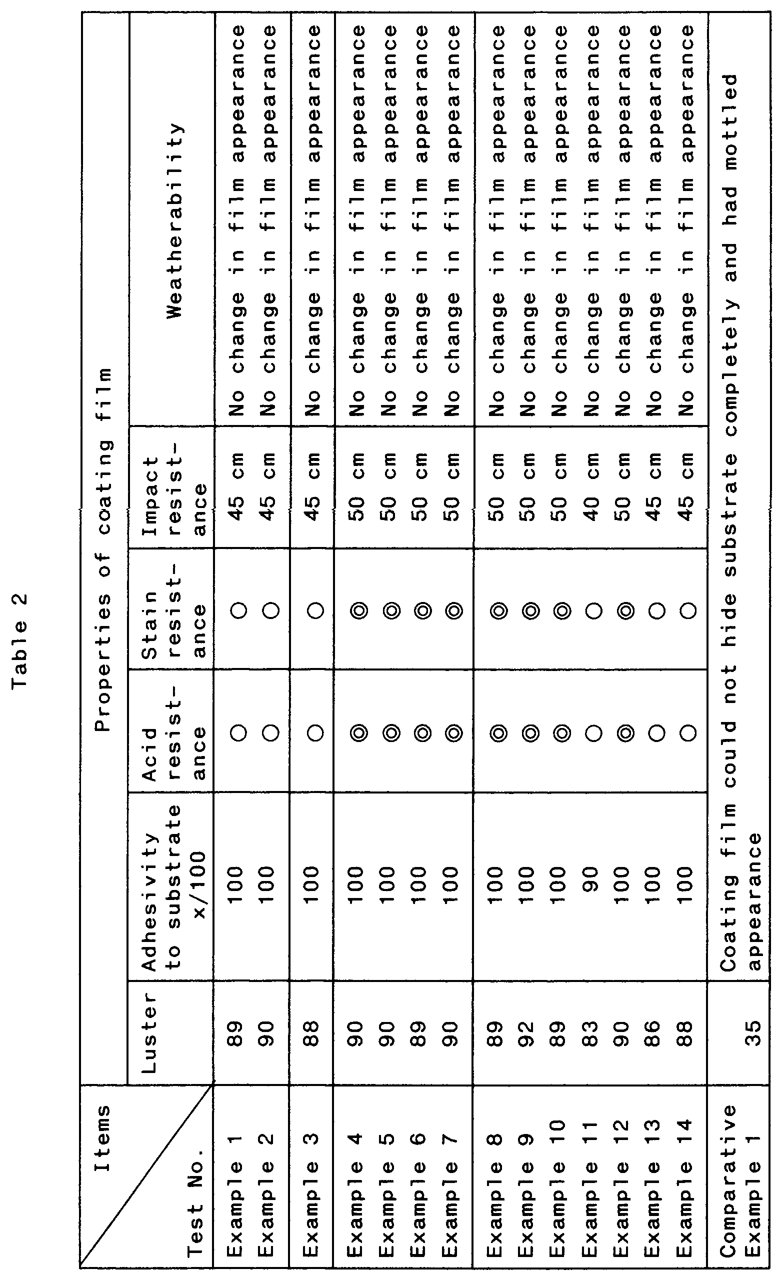

## Claims

1. A powder coating comprising associated particles having an average particle diameter of 3-70 µm, said associated particles containing fine polymer particles having an average particle diameter of 0.01-2 µm.

2. A powder coating according to Claim 1, wherein the fine polymer particles are obtained from a polymer emulsion.

3. A powder coating according to Claim 2, wherein the polymer emulsion is an emulsion of a resin selected from a polystyrene resin, a polyacrylic resin, a polystyrene-acrylic resin, an epoxy resin and a polyester resin.

4. A powder coating according to any of Claims 1-3, wherein the fine polymer particles contain a polar group(s).

5. A powder coating according to any of Claims 1-4, wherein at least part of the contact area between the fine polymer particles is melt-bonded in a filmy state.

6. A powder coating according to any of Claims 1-5, wherein the associated particles contain a curing agent.

7. A powder coating according to Claim 6, wherein the curing agent is a low-molecular weight curing agent selected from a polyisocyanate compound, a polyepoxy compound and a polybasic acid.

8. A powder coating according to any of Claims 1-7, wherein the associated particles contain a coloring agent.

9. A powder coating according to any of Claims 1-8, wherein the associated particles contain an antistatic agent.

10. A process for producing a powder coating, which comprises agglomerating fine polymer particles having an average particle diameter of 0.01-2 µm, in an aqueous medium to form a dispersion containing associated particles having an average particle diameter of 3-70 µm, drying said dispersion of associated particles to obtain associated particles, and making said associated particles into a powder coating.

11. A process according to Claim 10, wherein the fine polymer particles are polymer emulsion particles.

12. A process according to Claim 11, wherein the fine polymer particles contain a polar group(s).

13. A process for producing a powder coating, which comprises mixing an aqueous dispersion of fine polymer particles having an average particle diameter of 0.01-2 µm, with in-water-dispersed particles of a curing agent, agglomerating said two kinds of particles in an aqueous medium to form a dispersion containing associated particles having an average particle diameter of 3-70 µm, drying said dispersion of associated particles to obtain associated particles, and making said associated particles into a powder coating.

14. A process for producing a powder coating, which comprises agglomerating fine polymer particles having an average particle diameter of 0.01-2 µm, in an aqueous medium to form secondary particles having an average particle diameter of 0.05-5 µm, agglomerating the secondary particles to form a dispersion containing associated particles having an average particle diameter of 3-70 µm, drying said dispersion of associated particles to obtain associated particles, and making said associated particles into a powder coating.

15. A process according to Claim 13 or 14, wherein the fine polymer particles are polymer emulsion particles.

16. A process according to Claim 11 or 15, wherein a polymer emulsion is stirred at 20-45°C and then at a temperature not higher by 85°C than the glass transition temperature of the polymer, to form associated particles.

17. A process according to any of Claims 11-16, wherein the associated particles further contain a coloring agent and/or an antistatic agent.

18. A coating method which comprises applying a powder coating of Claim 1 onto a substrate.
